# EUROPÄISCHE PATENTSCHRIFT

(11) **EP 0 752 458 B1**
(45) Veröffentlichungstag und Bekanntmachung des Hinweises auf die Patenterteilung: **20.01.1999**
(21) Anmeldenummer: 96110047.6
(22) Anmeldetag: 21.06.1996
(51) Int. Cl.: C09K 21/02, D06M 11/74

(54) **Verfahren zur flammhemmenden Ausrüstung von textilen Flächengebilden und nach diesem Verfahren ausgerüstete Erzeugnisse**
Process for flame-proofing treatment of textile sheet materials and products treated by such process
Procédé d'équipement ignifuge de structures textiles planes et produits éuipés par ledit procédé

(30) Priorität: 04.07.1995 DE 19524373
(43) Veröffentlichungstag der Anmeldung: 08.01.1997
(73) Patentinhaber: Schill & Seilacher GmbH & Co., 71032 Böblingen (DE)
(72) Erfinder: Fritz, Bruno, 73087 Boll (DE); Wolber, Dieter, Dr., 71263 Schafhausen (DE); Münkel, Josef, 71144 Steinenbronn (DE)
(74) Vertreter: Bunke, Holger, Dr.rer.nat. Dipl.-Chem.

(56) Entgegenhaltungen:
- EP-A- 0 264 588
- DE-A- 3 813 252
- DE-A- 4 007 060
- DE-A- 4 135 678
- US-A- 3 002 850
- US-A- 3 934 285

## Beschreibung

Die Erfindung betrifft ein Verfahren zur flammhemmenden Ausrüstung von im wesentlichen aus brennbaren Fasern hergestellten textilen Flächengebilden sowie nach diesem Verfahren ausgerüstete Erzeugnisse. Unter "textilen Flächengebilden" werden in diesem Zusammenhang aus Fasern gebildete Flächengebilde verstanden, einschließlich aller Arten von Faservliesen (gebundene, ungebundene, vernadelte, unvernadelte Vliese), Fasermatten, Vorhangstoffe, Wärmedämmstoffe, Akustikdämmstoffe, Auslegeware (Teppichböden), Textiltapeten u.dgl.

Es ist bereits bekannt, zur flammhemmenden Ausrüstung brennbarer Flächengebilde, insbesondere von Papier und Pappe, Kunststoffolien und Schaumstoffen, intumeszierende, d.h. bei Beflammung expandierende, Mittel zu verwenden, die aufgrund des Energieverzehrs während der Expansion sowie aufgrund der physikalischen und chemischen Eigenschaften der in diesen Mitteln eingelagerten und bei Hitzeeinwirkung entweichenden gasförmigen Verbindungen zu einer Erhöhung der Flammfestigkeit und einer deutlichen Verlangsamung der Brandausbreitung der damit ausgerüsteten brennbaren Flächengebilde führen.

Eine wichtige Gruppe dieser bekannten intumeszierenden Mittel sind die Blähgraphite, die durch Umsetzung von Graphit mit rauchender Salpetersäure oder konzentrierter Schwefelsäure durch Einlagerung von NOₓ bzw. SOₓ in die Zwischengitterebenen des Graphits hergestellt werden können.

Blähgraphit wurde bisher jedoch nur als Bestandteil streichfähiger, thermisch expandierbarer Brandschutzmassen verwendet (DE-OS 38 13 252 und 41 35 678) oder aber bei der Papierherstellung direkt in den Stoff (Pulpe) vor der Blattbildung eingearbeitet (DE-OS 40 07 060).

Die Blähgraphit enthaltenden streichfähigen Massen eignen sich nur für Flächengebilde mit geschlossener Oberfläche wie z.B. Folien und Laminate, und sie haben den Nachteil, daß sie eine zusammenhängende, geschlossene Schicht auf dem jeweiligen Träger bilden, was zu einer beträchtlichen Gewichtsvermehrung des Materials führt.

Die Einarbeitung des Blähgraphits in die Stofflösung bei der Papierherstellung läßt sich auf andere Anwendungsgebiete, die nichts mit Papier und Pappe zu tun haben, nicht übertragen.

Der Erfindung liegt die Aufgabe zugrunde, ein Verfahren zur flammhemmenden Ausrüstung von im wesentlichen aus brennbaren Fasern hergestellten textilen Flächengebilden, insbesondere solcher, wie sie im Heimtextilbereich, im Automobil- und Filterbereich sowie auf dem Bausektor als Dämm- und Isolierstoffe verwendet werden, zu schaffen, mit dem einerseits eine deutliche Erhöhung der Flammfestigkeit und eine starke Verzögerung der Brandausbreitung bei gleichzeitiger Reduzierung der Rauchgasdichte im Brandfall möglich ist, das aber andererseits nicht zu einer merklichen Gewichtserhöhung der Flächengebilde führt.

Diese Aufgabe wird erfindungsgemäß dadurch gelöst, daß Blähgraphit in Form diskreter, haftender Flocken auf mindestens eine Oberfläche eines textilen Flächengebildes oder einer der das Flächengebilde bildenden Faserschichten aufgebracht wird.

Von den Fachleuten des hier einschlägigen Gebietes war zunächst angenommen worden, daß nur eine zusammenhängende Blähgraphitschicht aus brennbaren Flächengebilden auf Basis von nativen Fasern wie Wolle, Baumwolle, Zellulose oder dgl. oder von synthetischen Fasern einen Baustoff der Klasse B 1 und B 2 nach DIN 4102 machen könne. Es war deshalb völlig überraschend und für die beteiligten Fachleute nicht vorhersehbar, daß Blähgraphit auch dann zu einem Baustoff der Klasse B 1 und B 2 nach DIN 4102 führt, wenn er in Form einzelner, diskreter, nicht zusammenhängender, haftender Flocken auf eine Oberfläche eines Flächengebildes aus brennbaren Fasern aufgebracht wird, in einer Form also, die das Gesamtgewicht des Textilerzeugnisses nicht oder jedenfalls kaum merklich erhöht.

Die mit den Haftflocken versehene Oberfläche muß nicht die äußere Oberfläche eines textilen Flächengebildes sein; vielmehr kann es sich auch um eine oder mehrere Oberflächen im Inneren eines solchen Textils handeln, insbesondere, wenn es sich um ein mehrlagiges textiles Flächengebilde handelt.

Ein weiteres Problem, das die Einteilung eines Baustoffs in Klasse B 1 erschweren oder gar verhindern kann, stellt die Rauchgasentwicklung dar, die im Rahmen des "Radiant Panel Tests" (nach DIN 4102 Teil 14) gemessen und quantitativ als Rauchgasdichte ausgedrückt wird. Es ist bekannt, daß mit den üblichen Flammschutzmitteln ausgerüstete Fasermaterialien eine stärkere Rauchgasentwicklung aufweisen als nichtausgerüstete Materialien. Es ist nun völlig überraschend, daß Fasermaterialien, auf die Blähgraphit entsprechend dem erfindungsgemäßen Verfahren aufgebracht worden ist, bei weitem weniger Rauchgas entwickeln, wenn sie in Brand gesetzt werden, als in herkömmlicher Weise flammhemmend ausgerüstete und sogar nichtausgerüstete Textilmaterialien.

Eine exakte wissenschaftliche Erklärung für dieses überraschende Phänomen ist vorläufig noch nicht möglich. Es konnte nur festgestellt werden, daß die Eigenschaften der Baustoffklasse B 1 und B 2 mit Blähgraphit schon dann erreicht werden, wenn die Oberfläche des Flächengebildes punkt- oder inselförmig mit einzelnen, diskreten, haftenden Blähgraphitflocken übersät ist, so, daß zwischen den einzelnen Flocken eine netzförmige Matrix brennbarer Faseroberfläche zurückbleibt.

Es wurde festgestellt, daß bei den Blähgraphitflocken eine mittlere Teilchengröße von 150 bis 650 µm besonders wirksam ist. Dieser Teilchengrößenbereich ist deshalb bevorzugt.

Vorzugsweise werden Flocken aus NOₓ- und/oder SOₓ-Blähgraphit verwendet.

Der Blähgraphit wird bevorzugt in einer Menge M von 0 < M ≤ 30%, vorzugsweise von 1 % bis 10 %, bezogen auf das Warengewicht des textilen Flächengebildes aufgebracht.

Die Blähgraphitflocken können auch in Kombination mit anderen bekannten Flammschutzmitteln eingesetzt werden, z.B. mit Aluminiumoxid-Trihydrat, Magnesiumhydroxid, Calciumcarbonat, Zinkborat und dgl.

Zum Aufbringen des Blähgraphits auf das Fasermaterial und seiner Fixierung kommen verschiedene Methoden in Betracht:

Der Blähgraphit kann z.B. mit einem pulverförmigen Schmelzkleber auf Basis von Polyamid-, Polyester- oder Polyurethan-Copolymeren, von Polyethylen oder Ethylen/Vinylacetat-Copolymer, von Caprolactam- oder Epoxid-Klebern oder von Phenolharzen gemischt, in dieser Mischung auf das Fasermaterial aufgebracht und durch thermische Behandlung fixiert werden. Phenolharze sind allerdings aus ökologischen Gründen weniger bevorzugt.

Anstelle der Mischung ist auch eine mindestens teilweise Umhüllung der Blähgraphitflocken mit den genannten Bindemitteln oder Klebern möglich.

Eine weitere Möglichkeit des Aufbringens besteht darin, daß die Oberfläche des Fasermaterials mit einer wäßrigen Polymerlösung besprüht wird, wobei das Aufstreuen des Blähgraphits vor oder nach dem Besprühen erfolgen kann. Die Polymerlösungen können enthalten: Polyvinylalkohol (PVA), Stärke, Cellulose oder deren Derivate, Kautschuk, Polyolefine, Polyvinylacetat, Polyurethan, Polyacrylat, Polystyrolbutadiene, Copolymerisate auf Basis von Polyvinylacetat, Acrylat/Styrol, Ethylen/Vinylacetat und chlorhaltige Polymere. Letztere sind aus ökologischen Gründen weniger vorteilhaft.

Es ist auch möglich, die Blähgraphitflocken in Form einer Suspension oder Dispersion zusammen mit den zuvor genannten wäßrigen Polymerlösungen mittels üblicher Schaum- bzw. Pastentechnologie auf die Oberfläche des Flächengebildes bzw. der Faserschicht aufzutragen.

Eine weitere Möglichkeit besteht darin, den Blähgraphit auf eine thermoplastische Schmelzfaser, z.B. Polyethylen, Polypropylen, Bikomponentenfaser, z.B. Polyester/Polypropylen, oder ein aus solchen Fasern oder Filamenten hergestelltes Textil, z.B. in Form eines Faservlieses, einer Fasermatte, eines Gewebes, Gewirkes, Gestricks, Malimo-Geleges (Fadenlagen-Nähgewirk) oder getufteten Textilerzeugnisses wie z.B. Teppichboden-Auslegeware, aufzustreuen. Die Fixierung des Blähgraphits erfolgt dann ohne weitere chemische Zusätze, allein durch das Anschmelzen der thermoplastischen Faser, Kalandern und anschließendes Abkühlen.

Die Fasern, woraus das Flächengebilde ausschließlich oder überwiegend besteht, sind vorzugsweise Woll-, Bauwoll-, Flachs-, Sisal-, Kokos- und/oder Zellulosefasern, aber auch brennbare synthetische Fasern wie Polyester-, Polyamid-, Polypropylen-, Polyacrylnitril-, Polyethylenfasern und deren Mischungen. Diese brennbaren Fasern können aber auch einen geringen Anteil an unbrennbaren Fasern enthalten, z.B. an Carbon-, Aramid- und/oder Glasfasern.

Bevorzugte Anwendungsgebiete der Erfindung sind der Heimtextilbereich (Textiltapeten, Teppichböden, Vorhänge, Rollos, Markisen), der Bausektor (Damm- und Isolierstoffe, Fasermatten, Dachunterspannbahnen) und die Kraftfahrzeuginnenausstattung von PKWs, LKWs, Bussen, Eisenbahnwaggons, Flugzeugen und Schiffen (Akustikdämmatten, Seitenverkleidungen, Himmel, Hutablagen, Teppichböden, Polsterstoffe).

## Patentansprüche

1. Verfahren zur flammhemmenden Ausrüstung von im wesentlichen aus brennbaren Fasern hergestellten textilen Flächengebilden, dadurch gekennzeichnet, daß Blähgraphit in Form diskreter, haftender Flocken auf mindestens eine Oberfläche des textilen Flächengebildes oder einer der das Flächengebilde bildenden Faserschichten aufgebracht wird.

2. Verfahren nach Anspruch 1, dadurch gekennzeichnet, daß Blähgraphitflocken mit einer mittleren Teilchengröße von 150 bis 650 µm verwendet werden.

3. Verfahren nach Anspruch 1 oder 2, dadurch gekennzeichnet, daß Flocken aus NOx- und/oder SOₓ-Blähgraphit verwendet werden.

4. Verfahren nach einem der Ansprüche 1 bis 3, dadurch gekennzeichnet, daß der Blähgraphit in einer Menge von höchstens 30 %, vorzugsweise von 1 % bis 10 %, auf die Oberfläche des Flächengebildes bzw. der Faserschicht, bezogen auf deren Warengewicht, aufgebracht wird.

5. Verfahren nach einem der Ansprüche 1 bis 4, dadurch gekennzeichnet, daß Blähgraphitflocken verwendet werden, die mit mindestens einem weiteren Flammschutzmittel kombiniert sind.

6. Verfahren nach einem der Ansprüche 1 bis 5, dadurch gekennzeichnet, daß Blähgraphitflocken verwendet werden, die mindestens teilweise mit einer Umhüllung aus einem Bindemittel oder Kleber versehen sind.

7. Verfahren nach einem der Ansprüche 1 bis 6, dadurch gekennzeichnet, daß zum Aufbringen des Blähgraphits zunächst die Oberfläche des Flächengebildes bzw. der Faserschicht mit einem flüssigen Bindemittel besprüht wird, dann die Blähgraphitflocken auf die besprühte Oberfläche gestreut werden und schließlich die beflockte Oberfläche erneut mit dem flüssigen Bindemittel besprüht wird.

8. Verfahren nach einem der Ansprüche 1 bis 6, dadurch gekennzeichnet, daß die Blähgraphitflocken zusammen mit einem Bindemittel in Form einer Suspension oder Dispersion auf die Oberfläche des Flächengebildes bzw. der Faserschicht aufgebracht werden.

9. Verfahren nach einem der Ansprüche 6 bis 8, dadurch gekennzeichnet, daß als Bindemittel eine Polyvinylalkohol (PVA)-Lösung oder eine Lösung von Stärke, Zellulose oder deren Derivaten verwendet wird.

10. Verfahren nach Anspruch 6, dadurch gekennzeichnet, daß als Bindemittel ein Haftkleber verwendet wird.

11. Verfahren nach Anspruch 6, dadurch gekennzeichnet, daß als Bindemittel ein Schmelzkleber verwendet wird.

12. Verfahren nach einem der Ansprüche 1 bis 5, dadurch gekennzeichnet, daß Flächengebilde aus thermoplastischen Schmelzfasern verwendet werden, daß die Blähgraphitflocken auf die Schmelzfasern bzw. Flächengebilde gestreut und durch Anschmelzen der Fasern darauf fixiert werden.

13. Nach dem Verfahren gemäß einem der Ansprüche 1 bis 12 ausgerüstetes textiles Flächengebilde, dadurch gekennzeichnet, daß die Fasern des Flächengebildes Woll-, Baumwoll-, Flachs-, Sisal-, Kokos- und/oder Zellulosefasern oder brennbare synthetische Fasern sind.

14. Flächengebilde nach Anspruch 13, dadurch gekennzeichnet, daß die Fasern zusätzlich einen Anteil an unbrennbaren Fasern enthalten.

15. Flächengebilde nach Anspruch 14, dadurch gekennzeichnet, daß die unbrennbaren Fasern Carbon-, Aramid- und/oder Glasfasern sind.

16. Flächengebilde nach einem der Ansprüche 13 bis 15, dadurch gekennzeichnet, daß es eine Dämmstoffmatte, eine Dachunterspannbahn, eine Textiltapete, ein Teppichboden oder ein Bestandteil einer Kfz-Innenausstattung ist.

## Claims

1. A process for flame resistant finishing textile webs essentially made of combustible fibres, characterized in that intumescent graphite in the form of discrete adherent flakes is applied onto at least one surface of said textile web or of one of the fibre layers forming said web.

2. The process of claim 1, characterized in that intumescent graphite flakes having an average particle size of from 150 to 650 µm are used.

3. The process of claim 1 or claim 2, characterized in that flakes of NOₓ- and/or SOₓ-intumescent graphite are used.

4. The process of any one of claims 1 to 3, characterized in that said intumescent graphite is applied onto the surface of the web or a fibre layer thereof in an amount of at most 30%, preferably of from 1% to 10%, based on the weight of said web or layer.

5. The process of any one of claims 1 to 4, characterized in that intumescent graphite flakes are used which are combined with at least one additional flameproof agent.

6. The process of any one of claims 1 to 5, characterized in that intumescent graphite flakes are used which at least in part are provided with a cover of a binder or an adhesive.

7. The process of any one of claims 1 to 6, characterized in that for applying of said intumescent graphite first a liquid binder is sprayed onto said surface of said web or said fibre layer, then the intumescent graphite flakes are sprinkled over said sprayed surface and, finally, the flocked surface is newly sprayed with said liquid binder.

8. The process of any one claims 1 to 6, characterized in that said intumescent graphite flakes are applied onto the surface of said web or fibre layer together with a binder in the form of a suspension or dispersion.

9. The process of any one of claims 6 to 8, characterized in that a solution of polyvinyl alcohol (PVA) or a solution of starch, cellulose or derivatives thereof is used as said binder.

10. The process of claim 6, characterized in that a pressure-sensitive adhesive is used as said binder.

11. The process of claim 6, characterized in that a hotmelt adhesive is used as said binder.

12. The process of any one of claims 1 to 5, characterized in that webs of thermoplastic melting fibres are used, that said intumescent graphite flakes are sprinkled over said melting fibres or webs and are fixed thereon by melting-on said fibres.

13. Textile web finished according to the process of any one of claims 1 to 12, characterized in that the fibres of said web are fibres of wool, cotton, flax, sisal, coconut and/or cellulose or combustible synthetic fibres.

14. The web of claim 13, characterized in that said fibres additionally contain a proportion of non-combustible fibres.

15. The web of claim 14, characterized in that said non-combustible fibres are carbon, aramide and/or glass fibres.

16. The web of any one of claims 13 to 15, characterized in that said web is an insulating mat, a roofing web, a textile wallcovering, a web of wall-to-wall carpeting or a part of car interior fittings.

## Revendications

1. Procédé pour l'apprêt retardateur de combustion de produits à surfaces textiles préparés essentiellement à partir de fibres combustibles, caractérisé par le fait qu'on applique du graphite expansé sous forme de flocons collants, discrets, sur au moins une surface du produit à surfaces textiles ou sur au moins l'une des couches de fibres formant le produit à surfaces textiles.

2. Procédé selon la revendication 1, caractérisé par le fait qu'on utilise des flocons de graphite expansé avec une taille moyenne de particules de 150 à 650 µm.

3. Procédé selon la revendication 1 ou 2, caractérisé par le fait qu'on utilise des flocons de NOₓ- et/ou SO_{X}-graphite expansé.

4. Procédé selon l'une des revendications 1 à 3, caractérisé par le fait que le graphite expansé est appliqué en une quantité d'au plus 30%, de préférence de 1% à 10%, sur la surface du produit à surfaces ou de la couche de fibres, par rapport à leur poids de produit.

5. Procédé selon l'une des revendications 1 à 4, caractérisé par le fait qu'on utilise des flocons de graphite expansé qui sont combinés avec au moins un autre agent ignifugeant.

6. Procédé selon l'une des revendications 1 à 5, caractérisé par le fait qu'on utilise des flocons de graphite expansé qui sont munis au moins partiellement d'une enveloppe composée d'un liant ou d'un agent adhésif.

7. Procédé selon l'une des revendications 1 à 6, caractérisé par le fait que, pour appliquer le graphite expansé, on asperge d'abord la surface du produit à surfaces ou de la couche de fibres avec un liant liquide, puis on répartit les flocons de graphite expansé sur la surface aspergée et enfin on asperge à nouveau la surface floquée avec le liant liquide.

8. Procédé selon l'une des revendications 1 à 6, caractérisé par le fait qu'on applique les flocons de graphite expansé conjointement avec un liant sous forme d'une suspension ou d'une dispersion sur la surface du produit à surfaces ou de la couche de fibres.

9. Procédé selon l'une des revendications 6 à 8, caractérisé par le fait qu'on utilise comme liant une solution d'alcool polyvinylique (PVA) ou une solution d'amidon, de cellulose ou de leurs dérivés.

10. Procédé selon la revendication 6, caractérisé par le fait qu'on utilise comme liant une colle auto-adhésive.

11. Procédé selon la revendication 6, caractérisé par le fait qu'on utilise comme liant une colle à fusion.

12. Procédé selon l'une des revendications 1 à 5, caractérisé par le fait qu'on utilise des produits à surfaces en fibres de fusion thermoplastique et que les flocons de graphite expansé sont dispersés sur les fibres de fusion ou les produits à surfaces et y sont fixés par fusion des fibres.

13. Produit à surfaces textiles apprêtées au moyen du procédé selon l'une des revendications 1 à 12, caractérisé par le fait que les fibres du produit à surfaces sont des fibres de laine, de coton, de lin, de sisal, de coco et/ou de fibres de cellulose ou de fibres synthétiques combustibles.

14. Produit à surfaces selon la revendication 13, caractérisé par le fait que les fibres contiennent en outre une fraction de fibres non combustibles.

15. Produit à surfaces selon la revendication 14, caractérisé par le fait que les fibres non combustibles sont des fibres de carbone, d'aramide et/ou de verre.

16. Produit à surfaces selon l'une des revendications 13 à 15, caractérisé par le fait qu'il est un mat de matériau isolant, une bande de sous-tension de toiture, un tapis textile, une moquette ou un composant d'une décoration intérieure d'automobile.
